# EUROPÄISCHE PATENTANMELDUNG

(11) **EP 2 243 878 A1**
(43) Veröffentlichungstag der Anmeldung: **27.10.2010**
(21) Anmeldenummer: 09400021.3
(22) Anmeldetag: 23.04.2009
(51) Int. Cl.: D06M 16/00, D06P 1/22, D06P 3/00, D06P 3/60, D06P 3/82, A01N 53/00

(54) **Einsatz einer textilen Vektorenschutzstruktur und Entwicklung eines Verfahrens zur Herstellung einer textilen Vektorschutzstruktur**

(71) Anmelder: Color-Textil Veredelung Ein Unternehmensbereich der Peppermint Holding GmbH, 09669 Frankenberg (DE)
(72) Erfinder: Hauke, Karl-Heinz, 07985 Elsterberg (DE); Beck, Daniela, 09661 Hainichen (DE)
(74) Vertreter: Steiniger, Carmen

(57) **Zusammenfassung**

Die vorliegende Erfindung betrifft ein textile Vektorenschutzstruktur sowie ein Verfahren zu dessen Herstellung. Es ist die Aufgabe der vorliegenden Erfindung, eine textile Vektorenschutzstruktur sowie ein Verfahren zu entwickeln, um damit die Herstellung von Textilien mit Vektorenschutz zu ermöglichen, wobei der Wirkstoffgehalt exakt entsprechend den Anwendungserfordernissen eingestellt werden kann, Hautirritationen vermieden werden und ein langer Lebenszyklus erreicht wird. Diese Aufgabe wird einerseits durch ein Verfahren zur Herstellung einer textilen Vektorenschutzstruktur gelöst, wobei permethrinhaltige Fasern zu einer textilen Struktur verarbeitet werden und die textile Struktur in einem Vorbehandlungs- und/oder Textilveredelungsprozess bei Temperaturen von höchstens 130°C behandelt und/oder veredelt wird. Darüber hinaus wird die Aufgabe durch eine textile Vektorenschutzstruktur gelöst, welches aus einer permethrinhaltige Fasern enthaltenden, in einer Vorbehandlung bei Temperaturen von höchstens 130°C behandelten und/oder in einem Textilveredelungsprozess bei Temperaturen von höchstens 130°C veredelten textilen Struktur ausgebildet ist.

## Beschreibung

Die vorliegende Erfindung betrifft eine textile Vektorenschutzstruktur sowie ein Verfahren zur Herstellung von textilen Vektorenschutzstrukturen.

Vektoren sind für Menschen als auch für Tiere schädliche Insekten und/oder Spinnentiere, die durch ihre Stiche oder Bisse gefährliche Krankheiten übertragen und Infektionen auslösen können. Es wurde daher schon seit einigen Jahren nach Methoden zur Abwehr von Vektoren, insbesondere im Zusammenhang mit Textilien, geforscht.

So schlägt beispielsweise die Druckschrift EP 0 609 600 A1 einen mit dem insektizid wirkenden Wirkstoff Permethrin beschichteten Zeltstoff vor. Dabei wird das Permethrin mit einem geeigneten Plastifizierungsmittel, wie beispielsweise Wachs, auf der Innenoberfläche des Zeltes aufgebracht, wobei das Wachs um das Permethrin eine Hülle bildet, die verhindert, dass Permethrin durch Wechselwirkung mit Sauerstoff abgebaut wird. Zudem kann durch das Aufbringen an der Innenseite des Zeltes vermieden werden, dass das Permethrin beispielsweise durch Regen ausgewaschen wird.

Die in der Druckschrift EP 0 609 600 A1 vorgesehene Innenimprägnierung des Zeltes besitzt jedoch den Nachteil, dass Nutzer des Innenraums des Zeltes direkt mit der Permethrinbeschichtung in Kontakt kommen können, wobei bekannt ist, dass Permethrin insbesondere bei Menschen in falscher Dosierung Hautirritationen hervorrufen kann.

Eine andere Variante, permethrinhaltige Gewebe herzustellen, aus welchen sich Permethrin nicht so rasch auswaschen lässt, schlägt die Druckschrift EP 0 731 208 A2 vor. Gemäß dieser Druckschrift wird das Gewebe zunächst in ein Polyvinylazetat enthaltendes Bad und danach in ein Permethrin enthaltendes Bad getaucht. Nach den Autoren der Druckschrift haftet das Permethrin durch das Polyvinylazetat am Gewebe besser an und verlängert somit die Wirkung des Vektorenschutzes. Eine gleichmäßige Dosierung des Permethrins über die gesamte Textilie ist durch Schwankungen beim Abquetschen nach beiden Benetzungsbädern nicht gegeben.

Eine weitere Methode des Aufbringens von Permethrin auf ein Gewebe ist in der Druckschrift DE 10 2005 046 013 A1 beschrieben. Gemäß dieser Druckschrift werden synthetische Fasern zunächst einer Hydrophilisierungsbehandlung unterworfen und daraufhin in einem Foulard-Verfahren ein Insektizid, wie Permethrin, aufgebracht. In dem Foulard-Verfahren wird das Textilgut in das Insektizid getaucht und anschließend die überschüssige Lösung durch Abquetschen mit Gummiwalzen ins Gewebe gepresst.

Aufgrund der durch das Permethrin möglichen Hautreizungen bei Trägern von Bekleidungstextilien und der nach wie vor bestehenden leichten Auswaschbarkeit von Permethrin aus Textilien, schlägt die Druckschrift DE 20 2007 017 715 U1, in Abkehr von dem oben diskutierten Stand der Technik, vor, eine getrennt von der Bekleidungstextilie vorgesehene Trägervorrichtung vorzusehen, auf welcher das Permethrin aufgebracht ist. Eine solche Trägervorrichtung muss reversibel an der eigentlichen Bekleidungstextilie befestigt werden und ist daher für den praktischen Einsatzfall eher ungeeignet.

Es ist daher die Aufgabe der vorliegenden Erfindung, eine textile Vektorenschutzstruktur sowie ein Verfahren zu entwickeln, das die Herstellung von Textilien mit Vektorenschutz ermöglicht, wobei der Wirkstoffgehalt exakt entsprechend den Anwendungserfordernissen eingestellt werden kann, Hautirritationen vermieden werden und ein langer Lebenszyklus erreicht wird.

Diese Aufgabe wird durch ein Verfahren zur Herstellung einer textilen Vektorenschutzstruktur gelöst, wobei permethrinhaltige Fasern zu einer textilen Struktur verarbeitet werden und die textile Struktur in einem Vorbehandlungs- und/oder Textilveredelungsprozess bei Temperaturen von höchstens 130°C behandelt und/oder veredelt wird.

Im Gegensatz zu den im Stand der Technik bekannten Verfahren, in welchen zunächst textile Materialien, wie Garne und Gewebe, hergestellt werden und auf diese nachfolgend Permethrin als Vektorenschutz aufgebracht wird, wird erfindungsgemäß vorgeschlagen, bereits Fasern mit Permethrinwirkstoff in der textilen Herstellungskette Spinnen-Flächenherstellung-Textilveredelung einzusetzen. Durch dieses erfindungsgemäße Verfahren bleibt ein genau wählbarer Wirkstoffgehalt permanent in der textilen Struktur erhalten. Benutzungs- und Waschzyklen spielen dabei eine untergeordnete Rolle, Hautirritationen treten nicht auf.

Darüber hinaus ermöglicht es das erfindungsgemäße Verfahren, dass die textile Struktur durch einen auf den Wirkstoffgehalt der textilen Struktur thermisch abgestimmten Textilvorbehandlungs- und -veredelungsprozess Eigenschaften erhält, die beispielsweise für eine Bekleidungs- oder sonstige Wäschetextilie unbedingt erforderlich sind. Dabei weist die Vorbehandlung und/oder der Textilveredelungsprozess, im Gegensatz zu sonstigen Vorbehandlungs- und Textilveredelungsprozessen, nur Arbeitsgänge mit Temperaturen von höchstens 130°C auf, die es ermöglichen, dass die Vorbehandlung und Veredelung durchgeführt werden kann, ohne die permethrinhaltigen Fasern zu zerstören und/oder den Wirkstoffgehalt der Fasern zu stark zu beeinträchtigen. Das erfindungsgemäße Verfahren erfordert einen zeitlich und thermisch abgestimmten Vorbehandlungs- und/oder Textilveredelungsprozess. Überraschenderweise reichen Temperaturen von höchstens 130°C aus, um dennoch eine hochqualitative Vorbehandlung und Textilveredelung zu ermöglichen und trotzdem den Permethringehalt in den Fasern aufrechtzuerhalten. Dies ist erfindungsgemäß durch einen zeitlich und thermisch abgestimmten Vorbehandlungs- und/oder Textilveredelungsprozess möglich. Bei Nichteinhaltung oder Überschreitung von Durchlaufzeiten und Temperaturen reduziert sich die Wirkung des Vektorenschutzes sehr stark bzw. geht verloren.

So kann im Ergebnis des erfindungsgemäßen Verfahrens eine textile Vektorenschutzfläche zur Verfügung gestellt werden, die sich für verschiedene Anwendungsbereiche eignet, insbesondere für Bekleidung und Wäsche. Die dabei verwendete Faser mit Wirkstoffgehalt kann in der Spinnerei bereits einsatzgemäß dosiert werden und in der Flächenherstellung beispielsweise durch Bindungsauswahl so positioniert werden, dass ein direkter Permethrin-Haut-Kontakt sehr stark eingeschränkt werden kann und somit Hautirritationen vermieden werden, aber der volle Vektorenschutz langzeitlich erhalten bleibt. Diese Möglichkeiten sind bei den im Stand der Technik bekannten Verfahren nicht gegeben.

Vorzugsweise werden als permethrinhaltige Fasern erfindungsgemäß zellulosische Fasern mit chemisch in die Faser eingelagertem Permethrin verwendet. Derartige Fasern sind beispielsweise durch ein in der Druckschrift DE 10 2006 046 358 B3 beschriebenes Verfahren herstellbar. Diese Fasern besitzen den Vorteil, dass Permethrin in zellulosischen Formkörpern gelöst und darin gespeichert werden kann und daraufhin über einen langen Zeitraum als Wirkstoff gegenüber der Umgebung wirksam sein kann. Solche Fasern wirken permanent insektizid und weisen aufgrund ihres Strukturaufbaus eine hohe Waschpermanenz auf. Die in dem erfindungsgemäßen Verfahren eingesetzten zellulosischen Fasern mit Vektorenschutzfunktion behalten diese Wirkfunktion auch nach der erfindungsgemäß ausgeführten Vorbehandlung bzw. Textilveredelung.

Entsprechend eines besonders bevorzugten Ausführungsbeispiels der vorliegenden Erfindung werden Lyocellfasern mit einem Permethringehalt von etwa 10% bis etwa 22% verwendet. Dieser Permethringehalt ist ausreichend, um einen wirksamen Vektorenschutz zu erreichen und ist darüber hinaus gering genug, um bei geeigneter Einbindung der Lyocellfasern in die textile Struktur Hautirritationen vermeiden zu können.

Es hat sich als besonders günstig erwiesen, wenn die permethrinhaltigen Fasern als Mischgarn vorzugsweise mit Baumwolle und/oder Polyester verarbeitet werden. So kann ein großes Einsatzgebiet für die hergestellte textile Struktur vordefiniert werden, wobei in jedem Fall ein geeigneter Vektorenschutz zur Verfügung gestellt werden kann.

Gemäß einer vorteilhaften Ausführungsform der vorliegenden Erfindung wird die textile Struktur bei Farb- oder Druckware nur durch Verküpen, ohne Einsatz von Pigmenten und/oder Dispersionsfarbstoffen, in dem Textilveredelungsprozess behandelt. Das hat den Vorteil, dass bei dem Verküpen, bei welchem mit wasserunlöslichen Farbstoffen gearbeitet wird und das Färben der textilen Struktur durch eine Reduktion oder Oxidation erfolgt, die Temperatur, der die textile Struktur ausgesetzt wird, im Gegensatz zum Einsatz von Pigmenten oder Dispersionsfarbstoffen, unter 130°C gehalten werden kann. So kondensieren Pigmentfarbstoffe beispielsweise erst bei 150°C bzw. Dispersionsfarbstoffe in einem Bereich von 175°C bis 180°C. Bei diesen Temperaturen geht der Wirkstoff Permethrin verloren. Durch den Einsatz des Verküpens zum Färben kann das Permethrin gut in den Fasern gehalten werden und dennoch ein besonders gutes Farbergebnis entstehen.

Vorzugsweise wird bei polyesterhaltigen textilen Strukturen das Polyester bei der Ausbildung eines polyesterhaltigen Mischgarns oder bei der Konstruktion der textilen Struktur gleichmäßig in der textilen Struktur verteilt. Da Polyester Küpenfarbstoff nicht annimmt, hat die erfindungsgemäße Vorgehensweise den Vorteil, dass durch die Gleichverteilung des Polyesters in der textilen Struktur diese über ihre gesamte Breite hinweg gleichmäßig bedruckt werden kann.

In einer günstigen Weiterbildung der vorliegenden Erfindung wird die textile Struktur in dem Textilveredelungsprozess einer Kaltbleiche mit anschließender Neutralisation unterzogen. Die Kaltbleiche bewirkt eine Bleichung des Baumwollanteils der textilen Struktur, wodurch natürliche Verschmutzungen der Baumwolle eliminiert werden. Die so vorbehandelte, permethrinhaltige textile Struktur eignet sich somit besonders gut beispielsweise als Wäschetextilie.

Die Kaltbleiche ist jedoch optional und kann in anderen Varianten der Erfindung auch weggelassen werden.

Beispielsweise kann die textile Struktur durch Stricken, Wirken oder Weben hergestellt werden. Dabei gibt es viele Möglichkeiten, den gewünschten Wirkungsgrad zu erreichen. So kann beispielsweise beim Weben entweder jeder Kettfaden und jeder Schussfaden aus permethrinhaltigem Garn ausgebildet werden oder wahlweise jeder zweite Kettfaden oder jeder zweite Schussfaden aus permethrinhaltigem Garn ausgebildet werden oder wahlweise jeder dritte Kettfaden oder jeder dritte Schussfaden aus permethrinhaltigem Garn ausgebildet werden. Bei jeder dieser Varianten kann eine textile Struktur mit geeignetem Vektorenschutz zur Verfügung gestellt werden. Durch die Bindungsauswahl und die Positionierung der Funktionsfasern in der textilen Struktur kann der Hautkontakt stark beeinflusst werden.

Die Aufgabe wird ferner durch eine textile Vektorenschutzstruktur gelöst, welche aus einer permethrinhaltige Fasern enthaltenden, in einer Vorbehandlung bei Temperaturen von höchstens 130°C behandelten und/oder in einem Textilveredelungsprozess bei Temperaturen von höchstens 130°C veredelten textilen Struktur ausgebildet ist.

In den permethrinhaltigen Fasern der textilen Struktur wird der Wirkstoff Permethrin als Vektorenschutz dauerhaft eingelagert und auch über viele Wäschen hinweg gehalten. Zudem kann durch die Einbindung des Wirkstoffes in die Faser die Wechselwirkung zwischen Permethrin und der Haut beeinflusst werden. Indem die erfindungsgemäße textile Vektorenschutzstruktur vorbehandelt und/oder in einem Textilveredelungsprozess veredelt ist, kann es zudem nahezu alle, beispielsweise für Bekleidungs- oder Wäschetextilien, erforderlichen Anforderungen erfüllen.

Es ist besonders günstig, wenn die permethrinhaltigen Fasern zellulosische Fasern mit chemisch in die Fasern eingelagertem Permethrin sind. Es ist erfindungsgemäß vorgesehen, dass Funktion und Wirkungsgehalt des Vektorenschutzes schon bei der Faserherstellung eingebracht werden. Solche Fasern, die beispielsweise aus der Druckschrift DE 10 2006 046 358 B3 bekannt sind, zeichnen sich insbesondere dadurch aus, dass das Permethrin langzeitstabil eingelagert und somit über einen langen Zeitraum hinweg als Wirkstoff gegenüber der Umgebung vorhanden ist. Auch nach vielen Wäschen bleibt der Permethringehalt derartiger Fasern ausreichend hoch, sodass dauerhaft ein guter Vektorenschutz zur Verfügung gestellt werden kann.

Vorzugsweise sind die permethrinhaltigen Fasern Lyocellfasern mit einem Permethringehalt von etwa 10% bis etwa 22%. Ein Wirkstoffgehalt von etwa 10% bis etwa 22% Permethrin ist ausreichend hoch, um einen geeigneten Vektorenschutz zur Verfügung zu stellen.

Besonders vielfältige Anwendungsmöglichkeiten ergeben sich für die erfindungsgemäße textile Vektorenschutzstruktur, wenn die textile Struktur aus einem Mischgarn aus permethrinhaltigen Fasern und vorzugsweise aus Baumwolle und/oder Polyester hergestellt wurde. Das Mischgarn kann dabei in seiner Zusammensetzung an den jeweiligen Verwendungszweck angepasst werden und weist in jedem Fall einen geeigneten Vektorenschutz auf.

Entsprechend einer vorteilhaften Ausführungsvariante der vorliegenden Erfindung ist die textile Struktur bei Farb- oder Druckware nur mit Küpenfarbstoff, ohne Pigmente und/oder Dispersionsfarben, gefärbt oder bedruckt. Hierbei zeigt die erfindungsgemäße textile Vektorenschutzstruktur keine Verschlechterung der Farbgebung und ebenfalls keine Verringerung des Wirkstoffgehaltes.

Gemäß eines geeigneten Ausführungsbeispiels der vorliegenden Erfindung ist die textile Struktur eine gewebte textile Fläche, bei welcher entweder jeder Kettfaden und jeder Schussfaden aus permethrinhaltigem Garn ausgebildet ist oder wahlweise jeder zweite Kettfaden oder jeder zweite Schussfaden aus permethrinhaltigem Garn ausgebildet ist oder wahlweise jeder dritte Kettfaden oder jeder dritte Schussfaden aus permethrinhaltigem Garn ausgebildet ist. Somit kann erfindungsgemäß die Gewebebindung so gewählt werden, dass das Schussmaterial den überwiegenden Kontakt mit der Haut bildet. Auf diese Weise können Hautreizungen vermieden werden.

Beispielhafte Ausführungsformen der vorliegenden Erfindung, deren Funktion und Vorteile werden im Folgenden anhand der Figuren der Zeichnung näher erläutert, wobei
- Figur 1: schematisch eine grundlegende Schrittabfolge des erfindungsgemäßen Verfahrens darstellt;
- Figur 2: schematisch einen möglichen Verfahrensablauf eines Veredelungsprozesses gemäß einer Ausführungsform des erfindungsgemäßen Verfahrens zeigt;
- Figur 3: schematisch eine erste Variante eines Ausschnitts einer aus einem Gewebe ausgebildeten textilen Vektorenschutzstruktur in einer Draufsicht zeigt;
- Figur 4: schematisch eine zweite Variante eines Ausschnitts einer aus einem Gewebe ausgebildeten textilen Vektorenschutzstruktur in einer Draufsicht zeigt; und
- Figur 5: schematisch eine dritte Variante eines Ausschnitts einer aus einem Gewebe ausgebildeten textilen Vektorenschutzstruktur in einer Draufsicht zeigt.

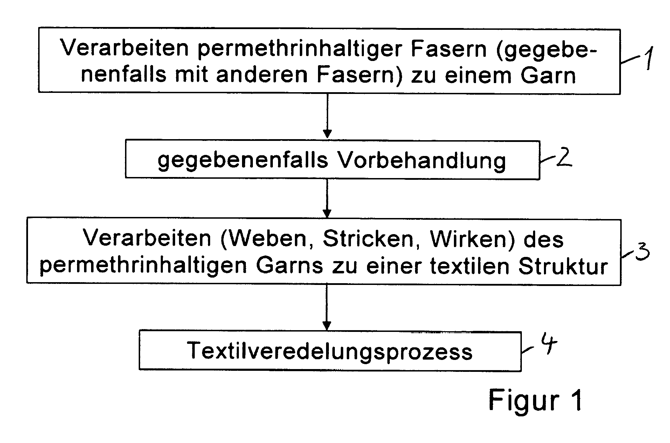

Fig. 1 zeigt schematisch die grundsätzliche Schrittabfolge des erfindungsgemäßen Verfahrens zur Herstellung einer textilen Vektorenschutzstruktur.

In dem Schritt 1 werden permethrinhaltige Fasern, gegebenenfalls mit anderen Fasern, wie Baumwoll- und/oder Polyesterfasern, zu einem Garn bzw. zu einem Mischgarn versponnen. Die hierbei verwendeten permethrinhaltigen Fasern können beispielsweise zellulosische Fasern mit chemisch in die Fasern eingelagertem Permethrin sein. Eine Möglichkeit zur Herstellung solcher Fasern ist in der Druckschrift DE 10 2006 046 358 B3 beschrieben. Es sind jedoch auch andere Verfahren zur Herstellung solcher Fasern möglich. Vorzugsweise werden erfindungsgemäß als permethrinhaltige Fasern Lyocellfasern mit einem Permethringehalt von etwa 10% bis etwa 22% verwendet.

So kann ein Mischgarn beispielsweise aus x% Lyocell mit Vektorenschutzfunktionsfasern, y% Baumwolle und z% Polyester ausgebildet werden. Für die Garnherstellung kann auch reines Lyocell mit Vektorenschutzfunktionsfasern verwendet werden. Gemäß einem vorteilhaften Beispiel kann das Mischgarn beispielsweise 15% Lyocellfasern mit dem Wirkstoff Permethrin aufweisen.

Der Wirkstoff Permethrin wirkt insektizid und ist durch die Einlagerung in die Faser schon bei der Faserherstellung dauerhaft in diese eingebunden. Somit kann der Wirkstoff Permethrin über einen längeren Zeitraum kontrolliert mit der Umgebung wechselwirken. Die erfindungsgemäß verwendeten permethrinhaltigen Funktionsfasern sind waschbar, ohne dass beim Waschen der Permethringehalt merkbar beeinträchtigt wird.

In dem Schritt 2 von Fig. 1 erfolgt gegebenenfalls eine Vorbehandlung des Garns vor dessen Verarbeitung zu einer textilen Struktur. Bei der Vorbehandlung kann beispielsweise eine Schlichte auf das Garn aufgebracht werden. Die Vorbehandlung darf nach der vorliegenden Erfindung nicht bei Temperaturen ausgeübt werden, die höher als 130°C sind.

Gemäß dem Schritt 3 von Fig. 1 wird nachfolgend das permethrinhaltige Garn durch Weben, Stricken oder Wirken zu einer textilen Struktur verarbeitet. Vorzugsweise ist die textile Struktur ein textiles Flächengebilde. Bei der textiltechnologischen Verarbeitung des Garns zu der textilen Struktur kann, wie nachfolgend im Detail erläutert, der Permethringehalt der textilen Struktur sowie die Verteilung des permethrinhaltigen Garns in der textilen Struktur gezielt, je nach Anwendungsfall, gesteuert werden. So kann der Wirkstoffgehalt bereits bei der Faserherstellung, bei der Mischgarnherstellung und bei der textilen Flächenkonstruktion variabel gestaltet werden. Damit kann der Funktionsgehalt variabel eingestellt werden und ist anwendungsdefiniert abrufbar.

Die Verarbeitung des permethrinhaltigen Garns zu einer textilen Struktur gemäß Schritt 3 von Fig. 1 erfolgt jeweils so, dass die an die textile Struktur gestellten Anforderungen an Zugfestigkeit, Dehnung, Quadratmetergewicht, Luftdurchlässigkeit u.s.w. erfüllt werden.

In dem nachfolgenden Schritt 4 von Fig. 1 wird die textile Struktur einem Textilveredelungsprozess unterzogen, wodurch die textile Struktur an die jeweils vorgesehene Anwendung angepasste Eigenschaften erhält. Bei der Textilveredelung kommen chemische, mechanische und/oder kombinierte chemisch-mechanische Verfahren zum Einsatz, vielfach mit thermischer Beeinflussung. Erfindungsgemäß sind die im Textilveredelungsprozess angewandten Arbeitsgänge, im Gegensatz zum herkömmlichen Veredelungsprozess, so modifiziert, dass die Temperaturen der einzelnen Arbeitsgänge höchstens 130°C betragen. Diese Vorgehensweise ermöglicht es, dass der Wirkstoffgehalt des Permethrins in der textilen Struktur während des Textilveredelungsprozesses nicht oder nur unwesentlich herabgesetzt wird und dennoch hochqualitative, veredelte textile Strukturen mit Vektorenschutz dem Anwender zur Verfügung gestellt werden können. Es ist überraschenderweise trotz der relativ niedrigen, erfindungsgemäß angewendeten Temperaturen möglich, die permethrinhaltige textile Struktur mit hoher Qualität zu veredeln.

Werden als permethrinhaltige Fasern Lyocellfasern, das heißt zellulosische Fasern, verwendet, ist darauf zu achten, dass bei dem Veredelungsprozess keine Merzerisierung durchgeführt wird.

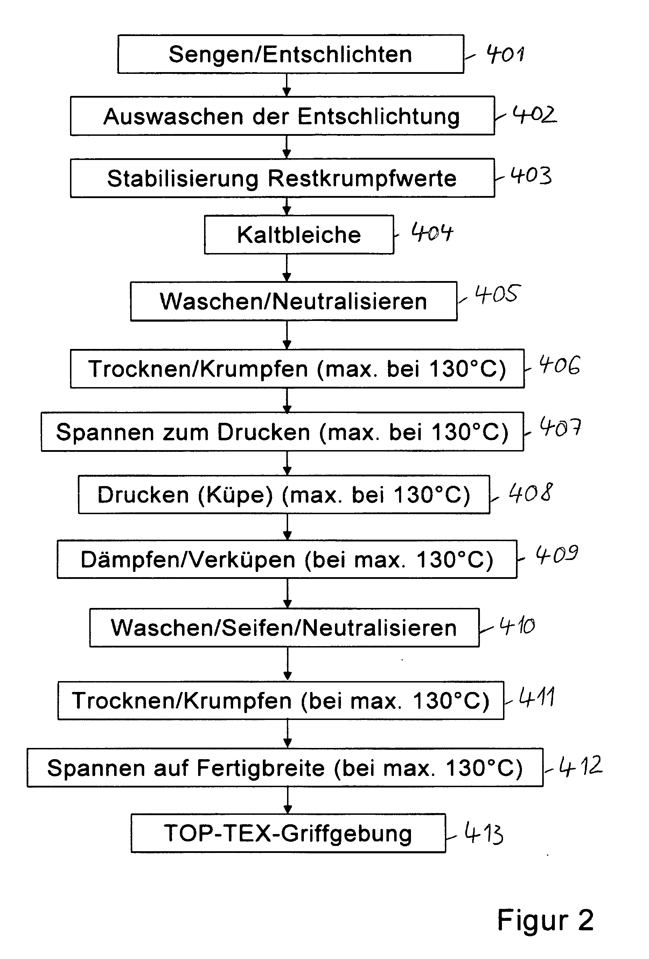

Fig. 2 zeigt schematisch anhand eines Ausführungsbeispiels eine mögliche Vorgehensweise während eines Textilveredelungsprozesses gemäß der vorliegenden Erfindung. Es sei jedoch darauf hingewiesen, dass auch andere Prozessabfolgen mit dem erfindungsgemäßen Verfahren möglich sind. So enthält die in Fig. 2 schematisch dargestellte Verfahrensabfolge speziell Veredelungsschritte für die Veredelung eines Gewebes mit Lyocell-Vektorenschutzfunktionsfasern, auf das ein Druck aufgebracht wird.

In dem Schritt 401 von Fig. 2 erfolgt ein Sengen bzw. Gasieren und Entschlichten des Gewebes. Beim Sengen werden überstehende Härchen beispielsweise über einer Gasflamme abgesengt, um eine glatte Optik der textilen Struktur zu erzielen. Beim Entschlichten wird die Schlichte von den Kettfäden der gewebten textilen Struktur entfernt, sodass der durch die Schlichte entstehende harte Griff der textilen Struktur beseitigt werden kann und darüber hinaus ein besseres Netz- und Durchfärbeverhalten des Gewebes erzeugt werden kann. Bei dem Sengen und Entschlichten kommen Temperaturen von maximal 95°C zum Einsatz.

In dem Schritt 402 von Fig. 2 wird die Entschlichtung bei einer Temperatur von maximal 95°C ausgewaschen.

In dem Schritt 403 von Fig. 2 erfolgt eine Stabilisierung der Restkrumpfwerte.

Nachfolgend wird die permethrinhaltige textile Struktur optional in dem Schritt 404 einer Kaltbleiche unterzogen. Die Bleichung sorgt für ein besseres Anfärben der Fasern in einem nachfolgenden Färbeschritt.

In dem Schritt 405 von Fig. 2 wird die textile Struktur gewaschen und neutralisiert, wobei Temperaturen von maximal 100°C zum Einsatz kommen.

Danach wird die textile Struktur in dem Schritt 406 einem Trocknen und Krumpfen bei maximal 130°C unterzogen. Während des Krumpfens oder Sanforisierens erfolgt eine mechanische Stauchung des Gewebes, wodurch eine Schrumpfung erzielt wird. Somit kann durch das Krumpfen ein späterer Wascheinsprung des Gewebes verhindert werden.

Daraufhin wird das Gewebe in dem Schritt 407 bei maximal 130°C zum Drucken gespannt.

In dem Schritt 408 von Fig. 2 erfolgt ein beidseitiges Drucken mit Küpenfarbstoff. Bei dem Färben und Bedrucken der permethrinhaltigen textilen Struktur kommen keine Pigmente und keine Dispersionsfarbstoffe zum Einsatz, da die Färbung mit Pigmenten oder Dispersionsfarbstoffen Temperaturen über 130°C erfordert, bei welchen der durch das Permethrin bewirkte Vektorenschutz flüchtig ist. Überraschenderweise kann allein durch das Färben mit Küpenfarbstoff ein sehr gutes Farbbild auf der permethrinhaltigen textilen Struktur erzeugt werden. Weist die textile Struktur Polyesterfasern auf, sind die Polyesterfasern bei der Ausbildung eines polyesterhaltigen Mischgarns und bei der Konstruktion der textilen Struktur gleichmäßig in der textilen Struktur zu verteilen. Dadurch kann, obwohl Polyester den Küpenfarbstoff nicht annimmt, eine gleichmäßige Bedruckung der textilen Struktur erreicht werden.

In dem Schritt 409 von Fig. 2 erfolgt danach ein Dämpfen und Verküpen der textilen Struktur bei maximal 130°C. Beispielsweise kann durch das Verküpen ein Tarndruck, z.B. für militärische Anwendungszwecke, auf der textilen Struktur erzeugt werden.

In dem nachfolgenden Schritt 410 wird die gefärbte textile Struktur gewaschen, geseift und neutralisiert.

In dem Schritt 411 von Fig. 2 schließt sich ein nochmaliges Trocknen und Krumpfen bei Temperaturen von maximal 130°C an.

In dem nachfolgenden Schritt 412 von Fig. 2 wird die textile Struktur auf Fertigbreite gespannt.

In dem Schritt 413 von Fig. 2 folgt eine TOP-TEX-Griffgebung, in welcher die textile Struktur typischerweise durch eine Stahlwalze, die über ein Gummiband läuft, zusammengedrückt wird, wodurch die Luftdurchlässigkeit und die Fadenzahl der textilen Struktur kontrolliert und korrigiert werden kann.

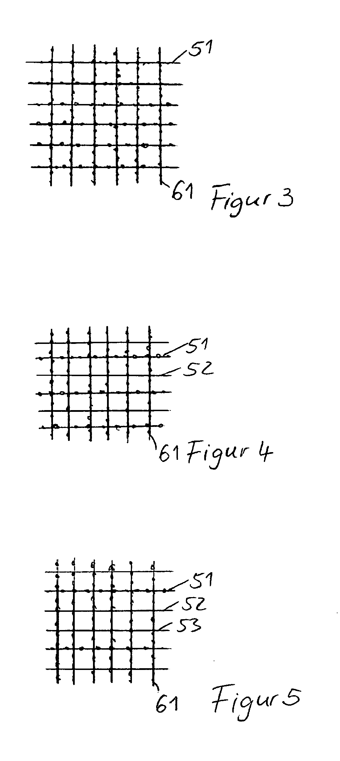

Fig. 3 zeigt schematisch eine Struktur einer als erfindungsgemäße textile Vektorenschutzstruktur verwendbaren textilen Struktur. Die in Fig. 3 gezeigte textile Struktur ist ein Gewebe mit Schussfäden 51 und Kettfäden 61. Beispielsweise weist das Gewebe eine Kettköperbindung auf. Es können jedoch auch andere Bindungsarten für das Gewebe verwendet werden.

In dem Beispiel von Fig. 3 sind 100% der Kettfäden 61 aus einem Mischgarn mit 14% Lyocellfasern mit einem Wirkstoffgehalt von 10% Permethrin ausgebildet. Darüber hinaus ist jeder der Schussfäden 51 ebenfalls aus diesem permethrinhaltigen Garn ausgebildet.

Fig. 4 zeigt eine weitere Gewebevariante für einen Einsatz als textile Vektorenschutzstruktur gemäß der vorliegenden Erfindung. Bei der Variante von Fig. 4 sind 100% der Kettfäden 61 permethrinhaltig. Von den Schussfäden ist jeder erste Schussfaden 51 aus permethrinhaltigem Garn ausgebildet, während jeder zweite Schussfaden 52 aus einem Garn ohne Wirkstoffgehalt ausgebildet ist.

Fig. 5 zeigt noch ein weiteres Ausführungsbeispiel für ein Gewebe, das erfindungsgemäß als textile Vektorenschutzstruktur verwendet werden kann. Bei dem Gewebe von Fig. 5 sind wiederum alle Kettfäden 61 aus einem permethrinhaltigen Garn ausgebildet. Bei den Schussfäden des Gewebes von Fig. 5 wird jeder erste Schussfaden 51 aus einem permethrinhaltigen Garn mit 10% Wirkstoffgehalt ausgebildet, während jeder zweite Schussfaden 52 und jeder dritte Schussfaden 53 ohne Wirkstoffgehalt ausgebildet werden.

Die Varianten von Fig. 4 und Fig. 5 bewirken einen geringeren Hautkontakt mit Permethrin, da die Schussfäden 51, 52, 53 mehr auf der Haut als die Kettfäden 41 aufliegen. So kann durch die spezielle Schussfädenauswahl, wie sie in den Fig. 3 bis 5 dargestellt ist, sowohl der Gesamtwirkstoffgehalt des Gewebes als auch dessen Wirkung auf den Träger zur Vermeidung von Hautirritationen gezielt gesteuert werden.

In anderen, nicht gezeigten Varianten der vorliegenden Erfindung kann die textile Vektorenschutzstruktur auch durch Wirken oder Stricken ausgebildet werden. Zudem können neben den gezeigten Gewebearten auch andere Gewebearten erfindungsgemäß hergestellt werden.

Bei der erfindungsgemäßen Verfahrensweise zur Herstellung der textilen Struktur gibt es viele Möglichkeiten, den gewünschten Wirkungsgehalt zu erreichen. Wie oben bereits ausgeführt, kann, unabhängig von der Art der Herstellung, jeder Faden mit Funktionsfasern, jeder zweite Faden mit Funktionsfasern, jeder dritte Faden mit Funktionsfasern oder Kettfäden mit und Schussfäden ohne Funktionsfasern ausgebildet werden. Beispielsweise kann ein erstes Fadensystem mit 22% Wirkstoffgehalt in der Funktionsfaser und ein zweites Fadensystem mit 10% Wirkstoffgehalt in der Funktionsfaser genutzt werden. Darüber hinaus besteht die Möglichkeit einer Verwendung von Kett- und/oder Schussbindung. Ferner ist es möglich, die Funktionsfasern überwiegend auf Warenober- bzw. Warenunterseite zu verbringen. Durch die Bindungsauswahl und die Positionierung der Funktionsfasern in der textilen Struktur kann der Hautkontakt ebenfalls stark beeinflusst werden.

Vorzugsweise sollte der Permethringehalt der hergestellten textilen Vektorenschutzstrukturen für Bekleidung minimal 1100 mg/m² und maximal 1600 mg/m² betragen. Durchschnittlich empfiehlt sich ein Permethringehalt der erfindungsgemäßen textilen Struktur von etwa 1300 mg/m².

Für sehr spezielle Anwendungen kann der Permethringehalt jedoch auch unter bzw. oberhalb der oben genannten Grenzwerte liegen.

Die erfindungsgemäß vorgeschlagene Vektorenschutzstruktur eignet sich insbesondere für textile Bekleidung in Regionen, in welchen von Insekten eine hohe Gefahr für Menschen und Tiere ausgeht. Beispielsweise können durch die textile Vektorenschutzstruktur Bekleidung und Moskitonetze für Afrika zur Verfügung gestellt werden. Die erfindungsgemäße textile Vektorenschutzstruktur eignet sich insbesondere auch für eine Verwendung im militärischen Bereich, sowohl im Wäschebereich, im Bekleidungsbereich als auch für die Ausbildung von Zelten, Überdachungen und dergleichen. Grundsätzlich kommen für die erfindungsgemäße textile Vektorenschutzstruktur unterschiedlichste Gewebe, Gewirke und Gestricke für Wäsche, Unterwäsche, Bett- und Tischwäsche, Matratzenstoffe, Bekleidung, Dekostoffe, Gardinen, Netze, Zelte usw. in Betracht.

## Patentansprüche

1. Verfahren zur Herstellung einer textilen Vektorenschutzstruktur,
**dadurch gekennzeichnet,**
**dass** permethrinhaltige Fasern zu einer textilen Struktur verarbeitet werden und
die textile Struktur in einem Vorbehandlungs- und/oder Textilveredelungsprozess bei Temperaturen von höchstens 130°C behandelt und/oder veredelt wird.

2. Verfahren nach Anspruch 1, **dadurch gekennzeichnet, dass** als permethrinhaltige Fasern zellulosische Fasern mit chemisch in die Fasern eingelagertem Permethrin verwendet werden.

3. Verfahren nach Anspruch 2, **dadurch gekennzeichnet, dass** Lyocellfasern mit einem Permethringehalt von etwa 10% bis etwa 22% verwendet werden.

4. Verfahren nach einem der vorhergehenden Ansprüche, **dadurch gekennzeichnet, dass** die permethrinhaltigen Fasern mit Baumwolle und/oder Polyester zu einem Mischgarn verarbeitet werden.

5. Verfahren nach einem der vorhergehenden Ansprüche, **dadurch gekennzeichnet, dass** die textile Struktur bei Farb- oder Druckware nur durch Verküpen, ohne Einsatz von Pigmenten und/oder Dispersionsfarbstoffen, in dem Textilveredelungsprozess behandelt wird.

6. Verfahren nach Anspruch 5, **dadurch gekennzeichnet, dass** bei polyesterhaltigen textilen Strukturen das Polyester bei der Ausbildung eines polyesterhaltigen Mischgarns und bei der Konstruktion der textilen Struktur gleichmäßig in der textilen Struktur verteilt wird.

7. Verfahren nach einem der vorhergehenden Ansprüche, **dadurch gekennzeichnet, dass** die textile Struktur in dem Textilveredelungsprozess einer Kaltbleiche mit anschließender Neutralisation unterzogen wird.

8. Verfahren nach einem der vorhergehenden Ansprüche, **dadurch gekennzeichnet, dass** die textile Struktur durch Stricken, Wirken oder Weben hergestellt wird, wobei beim Weben entweder jeder Kettfaden und jeder Schussfaden aus permethrinhaltigem Garn ausgebildet wird oder wahlweise jeder zweite Kettfaden oder jeder zweite Schussfaden aus permethrinhaltigem Garn ausgebildet wird oder wahlweise jeder dritte Kettfaden oder jeder dritte Schussfaden aus permethrinhaltigem Garn ausgebildet wird.

9. Textile Vektorenschutzstruktur,
welche aus einer permethrinhaltige Fasern enthaltenden, in einer Vorbehandlung bei Temperaturen von höchstens 130°C behandelten und/oder in einem Textilveredelungsprozess bei Temperaturen von höchstens 130°C veredelten textilen Struktur ausgebildet ist.

10. Textile Vektorenschutzstruktur nach Anspruch 9, **dadurch gekennzeichnet, dass** die permethrinhaltigen Fasern zellulosische Fasern mit chemisch in die Fasern eingelagertem Permethrin sind.

11. Textile Vektorenschutzstruktur nach Anspruch 10, **dadurch gekennzeichnet, dass** die permethrinhaltigen Fasern Lyocellfasern mit einem Permethringehalt von etwa 10% bis etwa 22% sind.

12. Textile Vektorenschutzstruktur nach einem der Ansprüche 9 bis 11, **dadurch gekennzeichnet, dass** die textile Struktur aus einem Mischgarn aus permethrinhaltigen Fasern und Baumwolle und/oder Polyester ausgebildet ist.

13. Textile Vektorenschutzstruktur nach einem der Ansprüche 9 bis 12, **dadurch gekennzeichnet, dass** die textile Struktur nur mit Küpenfarbstoff, ohne Pigmente und/oder Dispersionsfarben, gefärbt ist.

14. Textile Vektorenschutzstruktur nach einem der Ansprüche 9 bis 13, **dadurch gekennzeichnet, dass** die textile Struktur nur mit Küpenfarbstoff, ohne Pigmente und/oder Dispersionsfarben, bedruckt ist.

15. Textile Vektorenschutzstruktur nach einem der Ansprüche 9 bis 14, **dadurch gekennzeichnet, dass** die textile Struktur eine gewebte textile Fläche ist, bei welcher entweder jeder Kettfaden und jeder Schussfaden aus permethrinhaltigem Garn ausgebildet ist oder wahlweise jeder zweite Kettfaden oder jeder zweite Schussfaden aus permethrinhaltigem Garn ausgebildet ist oder wahlweise jeder dritte Kettfaden oder jeder dritte Schussfaden aus permethrinhaltigem Garn ausgebildet ist.
